# EUROPEAN PATENT APPLICATION

(11) **EP 2 990 175 A1**
(43) Date of publication of application: **02.03.2016**
(21) Application number: 14871459.5
(22) Date of filing: 04.11.2014
(51) Int. Cl.: B29C 45/16, B29C 45/26

(54) **THERMOSETTING RESIN MOLDED ARTICLE AND METHOD FOR PRODUCING SAME**

(30) Priority: 19.12.2013 JP 2013262070; 19.12.2013 JP 2013262071
(71) Applicant: Proto Co., Ltd., Oura-gun, Gunma 370-0613 (JP)
(72) Inventor: FURUYA, Tamio, Oura-gun Gunma 370-0613 (JP)
(74) Representative: Plougmann & Vingtoft A/S
(86) International application number: PCT/JP2014/079173
(87) International publication number: WO 2015/093165

(57) **Abstract**

The present invention is to provide a thermosetting resin molded article having a surface on which a plated membrane or a painted membrane can be formed without application of a mold release agent, defatting, sanding and primer processing; and a method for producing the same. In the present invention, a thermosetting resin molded article is produced by a method of applying a thermoplastic resin solution obtained by dissolving at least a styrene resin in a solvent to at least a design forming area in a surface of a shaping mold, drying the shaping mold to form a thermoplastic resin membrane, and injecting a thermosetting resin composition into a cavity of the shaping mold and thermally curing the thermosetting resin composition, to obtain a thermosetting resin molded article having a surface on which the thermoplastic resin membrane. The thermoplastic resin solution may be obtained by dissolving the styrene resin and a carbon material in the solvent.

## Description

### TECHNICAL FIELD

The invention relates to a thermosetting resin molded article and a method for producing the same, more particularly, to a thermosetting resin molded article having a surface on which a plated membrane can be formed through plating process and on which a painted membrane can be formed by painting, and a method for producing the same.

### BACKGROUND ART

As a method for applying a paint on a surface of a thermosetting resin molded article, an in-mold coating by simultaneously molding and painting a molded article, and a post-coating by applying a paint to a surface of a produced thermosetting resin molded article are known. The in-mold coating is proposed, for example, in patent document 1. The post-coating, which needs defatting and sanding, is a method by primer-painting the surface of the produced molded surface, and then applying a resin paint (main coating) on the primer-painted surface.

On the other hand, when a plated membrane is formed on a surface of the thermosetting resin molded article, it is general to produce a product by injecting a plating-grade type ABS resin or vacuum-molding a plating-grade type ABS resin sheet on the surface of the molded article and to plate it by using a plating line of the ABC resin. When the plated membrane is formed on the surface of the thermosetting resin molded article obtained by reaction injection molding, it is general to make the surface of the thermosetting resin molded article be conductive and to directly electroplating it.

### PRIOR ART DOCUMENTS

### PATENT DOCUMENT

Patent document 1: JP 2010-23269 A

### SUMMARY OF THE INVENTION

### PROBLEM TO BE SOLVED BY THE INVENTION

However, the injection molding has a problem such that the shaping mold is expensive and long time is required for producing the shaping mold, and the vacuum molding has a problem such that the corner of the molded article becomes round shape. Specifically, the injection molding requires a shaping mold with high strength because a pellet is plasticized and melted to be molded under a high molding pressure, which results in an expensive shaping mold and long time for producing the shaping mold. Although the vacuum molding does not require an expensive shaping mold and does not require long time for producing the shaping mold, there is a disadvantage that the sheet thickness causes an R shape that makes the molded article have a round corner, which results in unsatisfactory of the molded article quality.

In a case where the thermosetting resin molded article obtained by a reaction injection molding is directly electroplated, palladium concentration in the catalyst bath is twice as high as that in a case of non-electrolytic plating, which causes increase in cost.

Thus, in order to solve the above-mentioned problem, the purpose of the present invention is to provide a thermosetting resin molded article having a surface on which a plated membrane or a painting membrane can be formed without application of a mold release agent, defatting, sanding and primer processing, and a method for producing the same.

### MEANS TO SOLVE THE PROBLEM

The present invention is a method for producing a thermosetting resin molded article, including:
applying a thermoplastic resin solution obtained by dissolving at least a styrene resin in a solvent to at least a design forming area in a surface of a shaping mold;
drying the shaping mold to form a thermoplastic resin membrane; and
injecting a thermosetting resin composition into a cavity of the shaping mold and thermally curing the thermosetting resin composition, to obtain a thermosetting resin molded article having a surface on which the thermoplastic resin membrane.

Also, the present invention is a thermosetting resin molded article produced by the above-described method.

### EFFECT OF THE INVENTION

According to the present invention, a thermosetting resin molded article having a surface on which a plated membrane or a painting membrane can be formed without application of a mold release agent, defatting, sanding and primer processing, and a method for producing the same can be provided.

### BRIEF DESCRIPTION OF DRAWINGS

FIG. 1 is a sectional view of a shaping mold before clamped.
FIG. 2 is a sectional view of a state that a urethane resin composition is injected after clamping the shaping mold.

### MODE FOR CARRYING OUT THE INVENTION

In the present invention, a thermosetting resin composition is injected into a cavity of a shaping mold, and the thermosetting resin composition is thermally cured (reaction injection molding (RIM)) to obtain a thermosetting resin molded article. The pressure for injecting the thermosetting resin composition is typically 1 to 10 kg/cm². Examples of the liquid thermosetting resin composition which can be injection-molded include urethane resin compositions, epoxy resin compositions, polyester resin compositions and phenol resin compositions. In the present specification, an example of a method for producing a urethane resin molded article by using a urethane resin composition is specifically described.

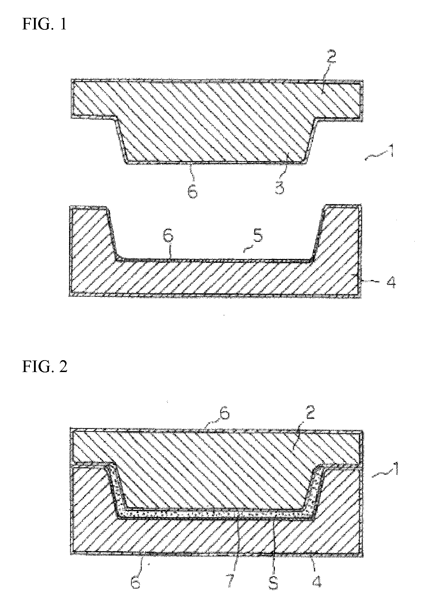

FIG. 1 is a sectional view showing a shaping mold before clamped, and FIG. 2 is a sectional view showing a state that the urethane resin composition is injected after clamping the shaping mold. In FIGS. 1 and 2, a shaping mold 1 consists of a male mold (upper mold) having convex part 3 on the lower surface thereof and a female mold 4 (lower mold) having a concave part 5 on the upper surface thereof. The male mold 2 and the female mold 4 may be made of metal such as aluminum or be made of a synthetic resin.

In FIGS. 1 and 2, the surface of the shaping mold 1 is covered with a composite-plated membrane 6. That is, at least the design forming area in the surface of the shaping mold 1 is preferably preliminarily composite-plated. Accordingly, when a thermosetting resin composition is injected in a cavity of the shaping mold 1, the thermosetting resin composition flows fluently, the surface of the obtained thermosetting resin molded article is less likely to be damaged, and the obtained thermosetting resin molded article is easily demolded. The area where the composite-plated membrane 6 is formed may be only a design forming area of the surface of the shaping mold 1, also be an entire cavity forming area, and be the entire surface of the shaping mold 1 as shown in FIGS. 1 and 2. The thickness of the composite-plated membrane 6 which is formed on the surface of the shaping mold 1 is preferably 5 to 20 µm. However, the shaping mold 1 does not need to be composite-plated.

A non-electrolytic nickel-PTFE composite plating is preferable for the composite plating. The non-electrolytic nickel-PTFE composite plating is so-called Teflon (registered trademark) plating, and a membrane in which fine PTFE (polytetrafluoroethylene) particles are uniformly dispersed and codeposited is formed in a non-electrolytic nickel membrane. The PTFE, which is a fluoric resin (fluorinated carbon resin) consisting of only a fluorine atom and a carbon atom, is stable for chemistry and is superior in heat resistance and chemical resistance. Also, since the matrix firmly keeps each of the fine particles of the PTFE, and the matrix is metal, adhesion between the basis body and the PTFE plating become high. The content of the PTFE in the plating liquid is preferably 25 to 40 vol%.

Next, a method for producing a urethane resin molded article using this shaping mold 1 is described below. Firstly, after cleaning the shaping mold 1 as needed, a thermoplastic resin solution which is obtained by dissolving at least a styrene resin in a solvent is applied to at least a design forming area of the surface of the shaping mold 1. Then, the shaping mold 1 is dried to form a thermoplastic resin membrane (not shown). The area where the thermoplastic resin membrane is formed by applying a thermoplastic resin solution may be only a design forming area of the surface of the shaping mold 1, also be an entire cavity forming area, and be the entire surface of the shaping mold 1. The thickness of the thermoplastic resin membrane formed on the surface of the shaping mold 1 is preferably 10 to 100 µm, and is more preferably 20 to 60 µm.

Examples of the styrene resin include polystyrenes (melting point: approximately 100°C), styrene-acrylonitrile copolymerized resins (SAN resin, melting point: approximately 115°C), acrylonitrile-butadiene-styrene copolymerized resins (ABS resin, melting point: approximately 100 to 125°C) and acrylonitrile-ethylene-styrenes copolymerized resin (AES resin, melting point: approximately 100 to 125°C) because they are easily dissolved in the solution. Above all, ABS resins are preferable, and plating-grade type ABS resins are more preferable. As the solvent, ketones such as methyl ethyl ketone (MEK) and acetone are preferable because they are easily dried. The thermoplastic resin solution can be prepared, for example, by dissolving a powdered or pellet-shaped ABS resin in MEK. Further, the viscosity of the thermoplastic resin solution can be adjusted by toluene (thinner).

The thermoplastic resin solution may be obtained by dissolving only a styrene resin in a solvent, also be obtained by dissolving a styrene resin and a carbon material in a solvent, and further include another component. By using a thermoplastic resin solution produced by dissolving a styrene resin and a carbon material in a solvent (hereinafter, particularly referred to as "conductive thermoplastic resin solution", in some cases), a plated membrane obtained by direct electroplating and a painted membrane obtained by electrostatic painting can be formed on the surface without application of a mold release agent, defatting, sanding and primer processing.

The carbon material may be a material which can add conductivity to the styrene resin, and examples thereof include graphite (carbon powder), amorphous substance carbon, diamond-like carbon and carbon nanotube, and above all, carbon powder is preferable. The compounding amount of the carbon material should be set appropriately to realize a desired conductivity and, for example, is preferably 50 to 500 parts by weight with respective to 100 part by weight of the styrene resin, and is more preferably 100 to 250 parts by weight. The resistance (resistance between 1 cm in distance measured by a tester) of the obtained conductive thermoplastic resin membrane is 1 to 500 kΩ, and is more preferably 2 to 30 kΩ.

After forming the thermoplastic resin membrane on the surface of the shaping mold 1, the shaping mold 1 is clamped and a urethane resin composition 7 which is a liquid thermosetting resin composition is injected into the cavity S which is formed between a male mold 2 and a female mold 4, and is thermally cured. Accordingly, a urethane resin molded article with a thermoplastic resin membrane on the surface can be obtained. The heating can be performed, for example, by constantly heating the male mold 2 and the female mold 4 with the heating means that is not shown. The temperature of the shaping mold 1 is preferably lower than the melting point of the styrene resin, is more preferably 40 to 80°C, and can be kept at around 75°C for example. When the temperature of the shaping mold 1 is lower than the melting point of styrene resin, the styrene resin is not plasticized and polymer-blend state with the urethane resin cannot be realized. That is, the urethane resin molded article in which the thermoplastic resin membrane is adhered to the surface of the cured thermosetting resin composition, is one of a preferred embodiment of the present invention. The injected urethane resin composition 7 is cured through urethane reaction, however, curing through urethane urea reaction can make the reaction time shorter and make the heat resistance improved.

Then, the shaping mold 1 is opened to take a urethane resin molded article from the shaping mold 1. In this case, since the thermoplastic resin membrane formed on the surface of the shaping mold 1 is easily demolded from the shaping mold 1, the urethane resin molded article can be easily taken. After that, the burr is removed as needed.

The obtained urethane resin molded article can be plated by using a decoration plating line for decoration and can be painted. Particularly, when a plating-grade type ABS resin is used as a styrene resin, a direct non-electrolytic plating is available. When the above-mentioned conductive thermoplastic resin solution is used, the obtained urethane resin molded article can be directly electroplated by using an electroplating line for decoration and can be electrostatically painted.

Further, since the thermoplastic resin membrane formed on the surface of the shaping mold 1 is easily demolded from the shaping mold 1, the mold release agent does not need to be applied to the surface of the shaping mold 1. Of course, the mold release agent may be applied to the surface of the shaping mold 1, but if the mold release agent is not applied, the surface of the obtained urethane resin molded article can be painted and can be plated without defatting, sanding with a sandpaper, and modification and processing of a generated pinhole. When the above-mentioned conductive thermoplastic resin solution is used, the obtained urethane resin molded article can be electrostatic-painted and can be directly electroplated on surface thereof.

That is, the urethane resin molded article with a styrene resin membrane on the surface is directly painted after the burr is removed as needed. Also, the urethane resin molded article with the plating-grade type ABS resin membrane on the surface can be directly non-electrolytically plated after the burr is removed as needed, and can be further electrolytically plated on the surface thereof. Thus, because the number of steps is decreased, time required for the molding can be drastically shortened, and because powder is not generated by sanding, work environment is improved.

Also, the urethane resin molded article with the conductive styrene resin membrane on the surface thereof by using the above-mentioned conductive thermoplastic resin solution can be directly electrostatically painted without defatting after the burr is removed as needed. The electrostatic painting can be conducted by using an electrostatic painting device. Specifically, a grounded urethane resin molded article is cathode and a paint spray system is anode, then an electrostatic field is generated between two electrodes by applying a DC high voltage, and paint fine particles are negatively charged and are flown along an electric line of force to be deposited to the urethane resin molded article which is cathode.

Further, the urethane resin molded article with the styrene resin membrane on the surface thereof can be directly electroplated after the burr is removed as needed. Thus, because the number of steps is decreased, time required for the molding can be drastically shortened, and because powder is not generated by sanding, work environment is improved.

Additionally, not as in the case that anABS resin sheet is vacuum-molded, there is no trouble that the corner of the molded article becomes round shape. More specifically, when the ABS resin sheet is vacuum-molded, the curvature radius of the corner of the urethane resin molded article is the same as the board thickness of the ABS resin sheet. However, according to the present invention, the curvature radius of the corner of the urethane resin molded article can be the same as the curvature radius of the corner of the shaping mold.

The plating process, in which the urethane resin molded article with the plating-grade type ABS resin membrane on the surface thereof is non-electrolytically plated and is further electrolytically plated, is described below. Firstly, as described above, the urethane resin molded article is taken from the shaping mold 1 and the burr was removed. After that, it is washed in water for fixing the surface, and is then etched. That is, the urethane resin molded article is immersed in an etching solution for a predetermined time. Accordingly, butadiene in the ABS resin is preferentially dissolved and removed to make moderate irregularity on the surface of the urethane resin molded article. After that, various kinds of preprocessings such as washing in water are conducted and a material attached to the surface of the urethane resin molded article is removed, to improving adhesion between the plated membrane to be formed and a base material (urethane resin molded article).

Then, the surface of the urethane resin molded article is neutralized and is washed in water. Further, the urethane resin molded article is immersed in catalyst that is a catalyzer for a predetermined time, and the urethane resin molded article is taken from the catalyst grant agent and is washed in water. Substantially, the urethane resin molded article is immersed in accelerator that is an activated liquid for a predetermined time, and is taken from the activated liquid and is washed in water.

As described above, the processed urethane resin molded article is immersed in a non-electrolytic nickel plating liquid for a predetermined time, and is non-electrolytically nickel plated to form a thin non-electrolytic nickel plated membrane on the surface of the urethane resin molded article. Then the urethane resin molded article is taken from the non-electrolytic nickel plating liquid and is washed in water.

After non-electrolytic plating for depositing this thin metal membrane to provide conductivity, it is electrolytically plated. Firstly, the urethane resin molded article which is non-electrolytically nickel plated is immersed in a metal acids aqueous solution for a short time to neutralize alkali which is remained on the surface thereof, and a thin oxidation layer generated in the processing is removed to activate the surface (acid activation). Next, the urethane resin molded article is taken from the metal acids aqueous solution and is washed in water. Subsequently, in order to improve adhesion of the plated membrane, the urethane resin molded article is immersed in a strike plating liquid for a predetermined time and is strike-plated to form a strike-plated membrane that is a thin plated membrane on the urethane resin molded article. Then, the urethane resin molded article is taken from the strike plated liquid and is washed in water.

Then, the urethane resin molded article is immersed in a copper sulfate plating liquid for a predetermined time to form a copper plated membrane, and is taken from the copper sulfate plating liquid and is washed in water. Further, half luster nickel plating of the urethane resin molded article is conducted, and it is taken from the luster nickel plating liquid and is washed in water. Subsequently, microporous nickel plating of the urethane resin molded article is conducted and it is washed in water. Accordingly, a nickel plated membrane can be formed on the surface of the urethane resin molded article.

Then, the urethane resin molded article is immersed in a chromic plating liquid for a predetermined time to form a chrome plated membrane which is superior to decorativeness. It is taken from the chrome plating liquid, and is washed in water and dried to finish the plating process.

As described above, according to the present invention, the urethane resin molded article is plated to deposit a thin metallic membrane on the surface thereof, thereby having various characteristics such as decorativeness, rust prevention and abrasion resistance. The urethane resin molded article produced by plating as such is checked, and only the urethane resin molded article having good quality can be shipped. Also, a plated membrane can be formed on the surface of the urethane resin molded article having satisfied quality without making the corner of the urethane resin molded article be round.

The plating process, in which the urethane resin molded article with a conductive ABS resin membrane on the surface thereof is electroplated, is described below. Firstly, as described above, the urethane resin molded article is taken from the shaping mold 1 and the burr was removed. After that, the urethane resin molded article is immersed in a copper sulfate plating liquid for a predetermined time to form a copper plated membrane, and is taken from the copper sulfate plating liquid and is washed in water. Further, half luster nickel plating of the urethane resin molded article is conducted, and it is taken from the luster nickel plating liquid and is washed in water. Subsequently, microporous nickel plating of the urethane resin molded article is conducted and it is washed in water. Accordingly, a nickel plated membrane can be formed on the surface of the urethane resin molded article.

Then, the urethane resin molded article is immersed in a chromic plating liquid for a predetermined time to form a chrome plated membrane which is superior to decorativeness. It is taken from the chrome plating liquid, and is washed in water and dried to finish the plating process.

As described above, according to the present invention, the urethane resin molded article is electroplated to deposit a thin metallic membrane on the surface thereof, thereby having various characteristics such as decorativeness, rust prevention and abrasion resistance. The urethane resin molded article produced by electroplating as such is checked, and only the urethane resin molded article having good quality can be shipped. Also, the plated membrane can be formed on the surface of the urethane resin molded article having satisfied quality without making the urethane resin molded article be round.

### EXAMPLES

### <Example 1>

Firstly, a plating-grade type ABS resin (trade name: KRALASTIC (registered trademark) AP-8A, for plating, produced by NIPPON A&L INC.) was dissolved in MEK so as to be a concentration of 50 wt%, and was further diluted with a slow-drying thinner (DAISHIN CHEMICAL CO., LTD) for adjusting the viscosity to prepare an ABS resin solution. Then, the ABS resin solution was sprayed with a spray gun to the surfaces of an upper mold (convex part) and a lower mold (concave part) of a metal mold which was set to be 65°C (actual measured temperature) so that the dried film thickness was 50 µm, and it was dried. After that, the upper and lower molds of the metal mold were clamped, and the urethane resin composition was injected into the formed cavity and the urethane resin composition was thermally cured. Subsequently, the upper and lower molds of the metal mold were opened and were taken a urethane resin molded article, and the burr was removed. Then, when the urethane resin molded article was non-electrolytically plated without preprocessing, a plated membrane was uniformly formed.

### <Example 2>

Firstly, a plating-grade type ABS resin (trade name: KRALASTIC (registered trademark) K-2540A, ABC powder, produced by NIPPON A&L INC.) was dissolved in MEK so as to be a concentration of 50 wt%, and was further diluted with a slow-drying thinner (DAISHIN CHEMICAL CO., LTD) for adjusting the viscosity to prepare an ABS resin solution. Then, the ABS resin solution was sprayed with a spray gun to the surfaces of an upper mold (convex part) and a lower mold (concave part) of a metal mold which was set to be 65°C (actual measured temperature) so that the dried film thickness was 25 µm, and it was dried. After that, the upper and lower molds of the metal mold were clamped, and the urethane resin composition was injected into the formed cavity and the urethane resin composition was thermally cured. Subsequently, the upper and lower molds of the metal mold were opened and were taken a urethane resin molded article, and the burr was removed. Then, when the urethane resin molded article was painted without preprocessing, a painted membrane was uniformly formed.

### <Example 3>

Firstly, a mixture obtained by mixing a normal grade ABS resin (trade name: KRALASTIC (registered trademark) K-2540A, ABC powder, produced by NIPPON A&L INC.) and carbon powder (bamboo charcoal, produced by BELL WOOD Co., Ltd) in a weight ratio of 2 to 3 was dissolved/disperse in MEK so as to be a solid concentration of 50 wt% , and was further diluted with a slow-drying thinner (DAISHIN CHEMICAL CO., LTD) for adjusting the viscosity to prepare a conductive ABS resin solution. Then, the conductive ABS resin solution was sprayed with a spray gun to the surfaces of an upper mold (convex part) and a lower mold (concave part) of a metal mold which was set to be 65°C (actual measured temperature) so that the dried film thickness was 50 µm, and it was dried. After that, the upper and lower molds of the metal mold were clamped, and the urethane resin composition was injected into the formed cavity and the urethane resin composition was thermally cured. Subsequently, the upper and lower molds of the metal mold were opened and were taken a urethane resin molded article, and the burr was removed. The resistance (resistance between 1 cm in distance measured by a tester) of the conductive ABS resin membrane formed on the surface of the urethane resin molded article was 15 kΩ. Then, when the urethane resin molded article was electroplated without preprocessing, a plated membrane was uniformly formed.

### <Example 4>

Firstly, a mixture obtained by mixing a normal grade ABS resin (trade name: KRALASTIC (registered trademark) K-2540A, ABC powder, produced by NIPPON A&L INC.) and carbon powder (bamboo charcoal, produced by BELL WOOD Co., Ltd) in a weight ratio of 2 to 3 was dissolved/disperse in MEK so as to be a solid concentration of 50 wt% , and was further diluted with a slow-drying thinner (DAISHIN CHEMICAL CO., LTD) for adjusting the viscosity to prepare a conductive ABS resin solution. Then, the conductive ABS resin solution was sprayed with a spray gun to the surfaces of an upper mold (convex part) and a lower mold (concave part) of a metal mold which was set to be 65°C (actual measured temperature) so that the dried film thickness was 25 µm, and it was dried. After that, the upper and lower molds of the metal mold were clamped, and the urethane resin composition was injected into the formed cavity and the urethane resin composition was thermally cured. Subsequently, the upper and lower molds of the metal mold were opened and were taken a urethane resin molded article, and the burr was removed. The resistance (resistance between 1 cm in distance measured by a tester) of the conductive ABS resin membrane formed on the surface of the urethane resin molded article was 15 kΩ. Then, when the urethane resin molded article was electrostatically painted without preprocessing, a painted membrane was uniformly formed.

As explained in the embodiment of the present invention, various kinds of alternatives, modification and transformation are available for those skilled in the art based on the above-mentioned explanation, and the present invention should include the above-mentioned various kinds of alternatives, modification and transformation without departing from purpose thereof.

### DENOTATION OF REFERENCE NUMERALS

- 1: shaping mold
- 2: male mold (upper mold)
- 3: convex part
- 4: female mold (lower mold)
- 5: concave part
- 6: thermoplastic resin membrane
- 7: urethane resin composition
- S: cavity

## Claims

1. A method for producing a thermosetting resin molded article, comprising:
applying a thermoplastic resin solution obtained by dissolving at least a styrene resin in a solvent to at least a design forming area in a surface of a shaping mold;
drying the shaping mold to form a thermoplastic resin membrane; and
injecting a thermosetting resin composition into a cavity of the shaping mold and thermally curing the thermosetting resin composition, to obtain a thermosetting resin molded article having a surface on which the thermoplastic resin membrane.

2. The method for producing a thermosetting resin molded article according to claim 1, wherein the styrene resin is a polystyrene, a styrene-acrylonitrile copolymerized resin (SAN resin), an acrylonitrile-butadiene-styrene copolymerized resin (ABS resin) or an acrylonitrile-ethylene-styrene copolymerized resin (AES resin), and wherein a temperature of the shaping mold is 40 to 80°C.

3. The method for producing a thermosetting resin molded article according to claim 1 or 2, wherein the styrene resin is a plating-grade type ABS resin.

4. The method for producing a thermosetting resin molded article according to claim 3, further comprising: non-electrolytically plating the surface of the thermosetting resin molded article.

5. The method for producing a thermosetting resin molded article according to claim 4, further comprising: electrolytically plating the surface of the thermosetting resin molded article which is non-electrolytically plated.

6. The method for producing a thermosetting resin molded article according to claim 1 or 2, further comprising: painting the surface of the thermosetting resin molded article.

7. The method for producing a thermosetting resin molded article according to claim 1 or 2, wherein the thermoplastic resin solution is a solution obtained by dissolving the styrene resin and a carbon material in the solvent.

8. The method for producing a thermosetting resin molded article according to claim 7, wherein a resistance (resistance between 1 cm in distance measured by a tester) of the conductive thermoplastic resin membrane is 1 to 500 kΩ.

9. The method for producing a thermosetting resin molded article according to claim 7 or 8, further comprising: electroplating the surface of the thermosetting resin molded article.

10. The method for producing a thermosetting resin molded article according to claim 7 or 8, further comprising: electrostatically painting the surface of the thermosetting resin molded article.

11. The method for producing a thermosetting resin molded article according to any one of claims 1 to 10, wherein non-electrolytic nickel-PTFE composite plating is conducted to at least the design forming area in the surface of the shaping mold.

12. The method for producing a thermosetting resin molded article according to any one of claims 1 to 11, wherein the thermosetting resin composition is a urethane resin composition.

13. A thermosetting resin molded article produced by the method according to any one of claims 1 to 12.
